# EUROPEAN PATENT APPLICATION

(11) **EP 1 296 477 A1**
(43) Date of publication of application: **26.03.2003**
(21) Application number: 01930161.3
(22) Date of filing: 15.05.2001
(51) Int. Cl.: H04L 9/08, G06F 17/60, G06F 15/00, G10K 15/02

(54) **CONTENT REPRODUCTION APPARATUS, CONTENT DISTRIBUTION SERVER, AND CONTENT DISTRIBUTION SYSTEM**

(71) Applicant: MITSUBISHI DENKI KABUSHIKI KAISHA, Tokyo 100-8310 (JP)
(72) Inventor: OHWADA, Minoru, MITSUBISHI DENKI KABUSHIKI KAISHA, Chiyoda-ku, Tokyo 100-8310 (JP); URAKAWA, Yasutaka, MITSUBISHI DENKI KK, Chiyoda-ku, Tokyo 100-8310 (JP)
(74) Representative: Popp, Eugen, Dr.
(86) International application number: JP0104045
(87) International publication number: WO02093825

(57) **Abstract**

A contents reproducing unit (3) which receives a reproduction permission authenticating key from a contents downloading server (1) and encrypts encrypted musical data recorded in a CD-ROM (21) by using the reproduction permission authenticating key.

## Description

### Technical Field

This invention relates to a contents reproducing unit for reproducing digital contents, a contents downloading server for downloading digital contents and a contents downloading system.

### Background Art

As a conventional contents distributing system, one has already been put on the market which has capabilities of downloading a musical data that is digital contents by a record company and the like via Internet, and of taking it into a personal computer or a cellular phone to reproduce it thereby.

The conventional contents distributing system thus configured as described above enables reproduction of the musical data upon downloading of digital contents such as a musical data. However, it takes a long time for downloading the musical data and goes up in price for communication because the digital contents such as a musical data has a huge amount of data.

The present invention has been made to solve the above problems, and an object thereof is to provide a contents reproducing unit capable of reproducing digital contents without downloading a huge amount of data.

Another object of the present invention is to provide a contents downloading server capable of downloading digital contents and a contents downloading server without incurring an increase in cost.

### Disclosure of Invention

A contents reproducing unit according to the present invention receiving means for receiving the decryption key from a contents downloading server upon request of an issue of the decryption key from the key requesting means for decrypting encrypted data recorded in the memory medium by using the decryption key.

According to the present invention, it enables reproduction of digital contents without downloading a huge amount of data. Further, free distribution of a memory medium in which contents are recorded accelerates spreading of potential users of contents.

In the contents reproducing unit according to the present invention the encrypted data recorded in the memory medium are a musical data.

According to the present invention, it obviates distribution of a huge amount of musical data itself.

In the contents reproducing unit according to the present invention reproducing means is provided for reproducing a musical data decrypted by the decrypting means.

According to the present invention, it enables enjoyment of music.

In a contents downloading server according to the present invention transmits a decryption key to a contents reproducing unit upon reception of a request for an issue of the decryption key from the contents reproducing unit of a user who has got free distribution of the memory medium.

According to the present invention, it allows distribution of digital contents without inviting an increase in cost.

In the contents downloading server according to the present invention charge collecting means is provided for collecting a charge from a user.

According to the present invention, it permits collection of digital contents without giving a user trouble.

In the contents downloading server according to the present invention the charge collecting means pays a distribution fee to an entrusted distributor of the memory medium.

According to the present invention, it promises a big business chance owing to entrusted distribution.

In the contents downloading server according to the present invention the charge collecting means receives from the contents reproducing unit a serial number of the encrypted data recorded in the memory medium upon reception of a request for an issue of the decryption key from the contents reproducing unit, and identifies the entrusted distributor of the memory medium based on the serial number of the entrusted data.

According to the present invention, it is possible to readily identify an entrusted distributor who has offered distribution of a memory medium.

In the contents downloading server according to the present invention the encrypted data recorded in the memory medium are a musical data.

According to the present invention, it obviates downloading of a huge amount of data itself.

In the contents downloading server according to the present invention the transmitting means transmits the decryption key on the date of issue of a new tune upon reception of a request for an issue of the decryption key before the date of issue of the new tune.

According to the present invention, it makes it possible to enjoy music on the date of issue of a new tune.

A contents downloading system according to the present invention transmits a decryption key to a contents reproducing unit upon reception of a request of an issue of the decryption key from the contents reproducing unit of a user who has got free distribution of a memory medium.

According to the present invention, it enables distribution of digital contents without incurring an increase in cost.

### Brief Description of Drawings

FIG. 1 is a block diagram showing a contents downloading system according to a first embodiment.
FIG. 2 is a block diagram showing a contents reproducing unit 3.
FIG. 3 is a block diagram showing a contents downloading server 1.
FIG. 4 is an explanatory diagram showing a serial number added to a musical data.
FIG. 5 is an explanatory diagram showing the relationship between an entrusted distributor of a CD-ROM 21 and a serial number of a musical data.
FIG. 6 is a block diagram showing a contents reproducing unit 3 in a contents downloading system according to a second embodiment.

### Best Mode for Carrying Out the Invention

In order to explain the present invention in more detail, a description will now be made about the best mode for carrying out the invention with reference to the accompanying drawings.

### First Embodiment

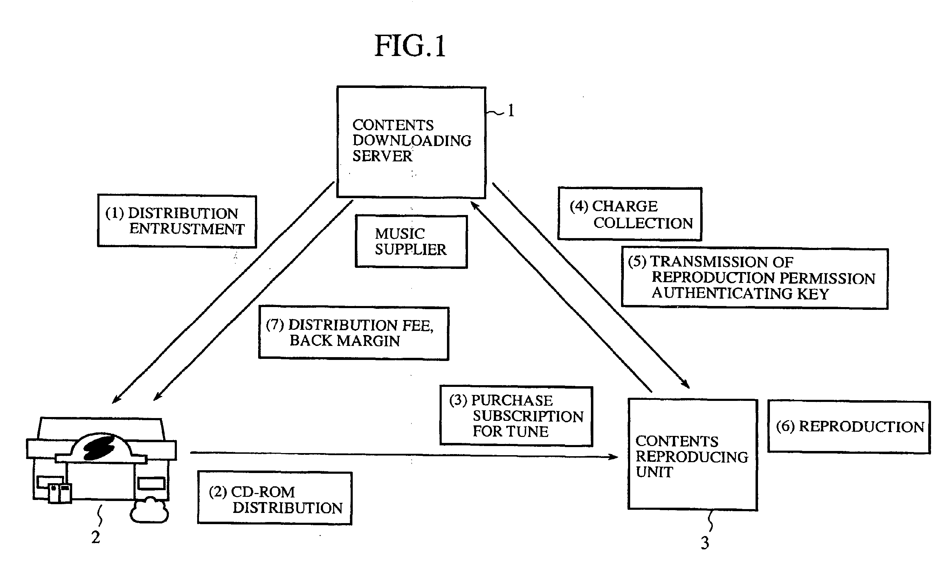

FIG. 1 is a block diagram showing a contents downloading system according to the first embodiment.

Referring to FIG. 1, reference numeral 1 denotes a contents downloading server for entrusting free distribution of a CD-ROM (memory medium) in which musical data are recorded that are encrypted data and for transmitting a reproduction permission authenticating key (decryption key) to a contents reproducing unit 3 upon reception of a request for an issue of the reproduction encryption authenticating key from the contents reproducing unit 3, 2 denotes an entrusted distributor such as a convenience store or a kiosk for executing free distribution of the CD-ROM in which musical data are recorded, 3 denotes a contents reproducing unit for requesting an issue of the reproduction permission authenticating key and for decrypting an encrypted musical data recorded in the CD-ROM by using the reproduction permission authenticating key so as to reproduce it upon reception of the reproduction permission authenticating key from the contents distributing server 1.

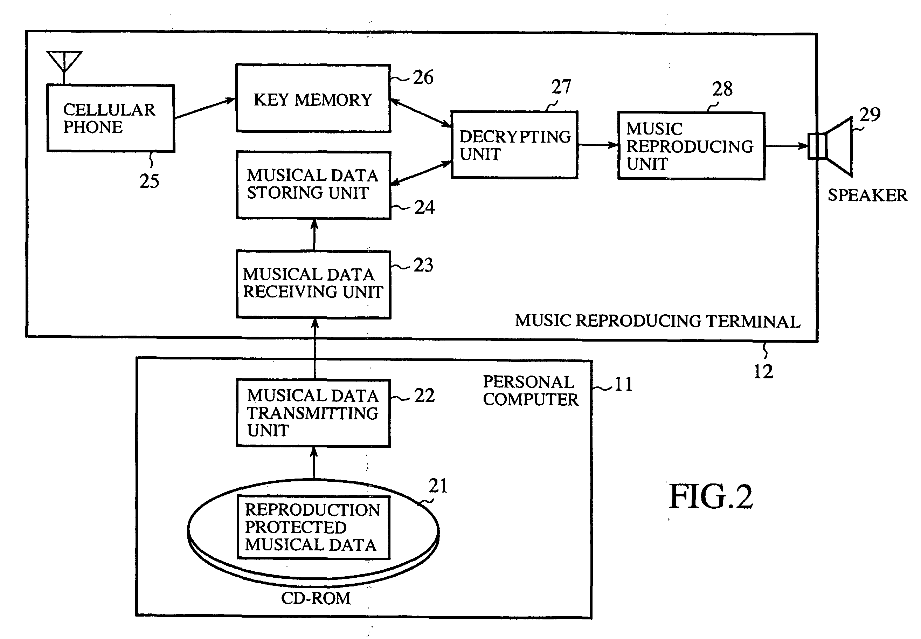

FIG. 2 is a block diagram showing the contents reproducing unit 3.

Referring to FIG. 2, reference numeral 11 denotes a personal computer for reading in a musical data recorded in the CD-ROM and transmitting it to a music reproducing terminal 12, 12 denotes a music reproducing terminals for requesting an issue of the reproduction permission authenticating key and for decrypting an encrypted musical data by using the reproduction permission authenticating key so as to reproduce it upon reception of the reproduction permission authenticating key from the contents downloading server 1.

Reference numeral 21 denotes a CD-ROM in which musical data are recorded, 22 denotes a musical data transmitting unit for reading in the musical data recorded in the CD-ROM and transmitting it to the music reproducing terminal 12, 23 denotes a musical data receiving unit for receiving a musical data, 24 denotes a musical data storing unit for storing therein the musical data, 25 denotes a cellular phone (key requesting means, receiving means) for requesting an issue of the reproduction permission authenticating key and for receiving it from the contents downloading server 1, 26 denotes a key memory for storing therein the reproduction permission authenticating key received by the cellular phone, 27 denotes a decrypting unit for decrypting an encrypted musical data by using the reproduction permission authenticating key, 27 denotes a decrypting unit (decrypting means) for decrypting an encrypted musical data by using the reproduction permission authenticating key, 28 denotes a music reproducing unit (reproducing means) for reproducing the musical data decrypted by the decrypting unit 27, 29 denotes a speaker.

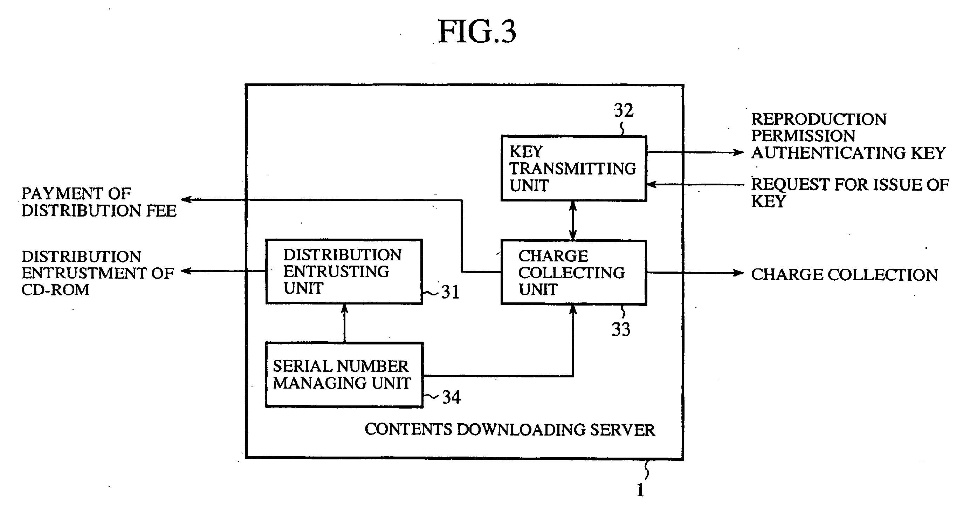

FIG. 3 is a block diagram showing the contents downloading server 1.

Referring to FIG. 3, reference numeral 31 denotes a distribution entrusting unit (distribution entrusting means) for entrusting free distribution of the CD-ROM 21, 32 denotes a key transmitting unit (transmitting means) for transmitting the reproduction permission authenticating key to the contents reproducing unit 3 upon reception of a request for an issue of the reproduction permission authenticating key from the contents reproducing unit 3 of a user who has got free distribution of the CD-ROM, 33 denotes a charge collecting unit (charge collecting means) for collecting a charge from a user and for paying a distribution fee to an entrusted distributor of the CD-ROM 21, 34 denotes a serial number managing unit for managing the relationship between the entrusted distributor of the CD-ROM 21 and a serial number of a musical data.

The operation of the contents downloading system of the first embodiment will now be described.

Music suppliers such as a record company is used to convert a new tune before issue to a musical data such as an MP3(MPEG Layer 3) to record the musical data in the CD-ROM 21.

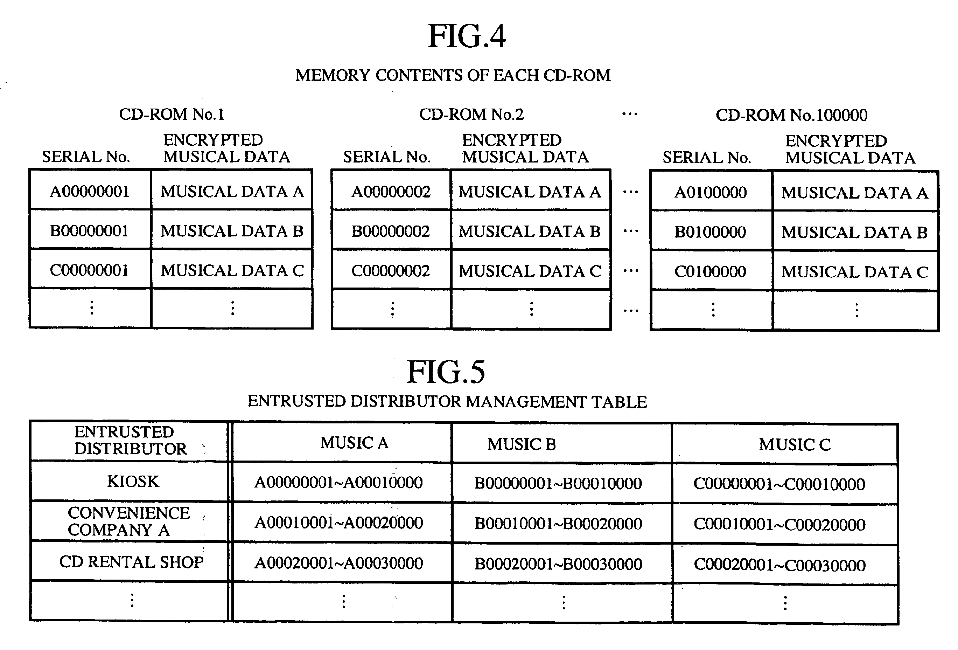

Meanwhile, reproduction of the musical data recorded in the CD-ROM 21 are protected through encryption. As shown in FIG. 4, a serial number is given to each of the musical data. However, in order to identify which of CD-ROM 21 is entrusted to which of distributor, if, even though an identical musical data, a musical data is recorded in another CD-ROM, different serial number will be given accordingly. For example, a musical data A to be recorded in a first CD-ROM is given a serial number of "A00000001", whereas a musical data B to be recorded in a second CD-ROM is given a serial number of "A00000002".

The distribution entrusting unit 31 in the contents downloading server 1 entrusts free distribution of the CD-ROM 21 to a convenience store or a kiosk, etc. The entrusted convenience store or the entrusted kiosk places the CD-ROM 21, e.g., in front of a register in order that a user can freely take out the CD-ROM 21. Besides, where the entrusted distributor 2 is an editorial company, the CD-ROM 21 may be attached as an annex of a magazine in order for a user to be available.

When a user is obtained the CD-ROM 21 through the entrusted distributor 2, he/she sets it into the personal computer 11. Then, the musical data transmitting unit 22 in the personal computer 11 begins to read in a musical data recorded in the CD-ROM 21. Where the user desires to reproduce, among one or more musical data registered in the CD-ROM 21, e.g., a musical data B, the musical data transmitting unit 22 transmits the musical data B to the music reproducing terminal 12.

The musical data receiving unit 23 in the music reproducing terminal 12 receives the musical data B transmitted from the personal computer B and stores it into the musical data storing unit 24.

The cellular phone 25 of the music reproducing terminal 12 requests an issue of a reproduction permission authenticating key to the contents downloading server 1 upon reception of a request for an issue of the reproduction permission authenticating key used for decryption of the musical data B from a user. Here, suppose that the request for an issue includes information about a serial number of the musical data B in addition to a telephone number of the cellular phone 25.

The charge collecting unit 33 in the contents downloading server 1 collects a charge from a user by carrying out a settlement of credits and the like upon reception of a request for an issue of the reproduction permission authenticating key by the key transmitting unit 32.

The key transmitting unit 32 transmits the reproduction permission authenticating key used for decryption of the encrypted musical data B to the contents reproducing unit 3 upon completion of collection of a charge by the charge collecting unit 33. However, in the event a request for an issue of the reproduction permission authenticating key is received before the data of issue of a new tune, it will be transmitted just on the date of issue of the new tune. Otherwise, the reproduction permission authenticating key will be transmitted as soon as possible.

The serial number managing unit 34, as shown in FIG. 5, manages the relationship between an entrusted distributor of the CD-ROM 21 and a serial number of the musical data. The serial number of the musical data B is helpful for identification of the entrusted distributor 2 who has distributed the CD-ROM 21. When a serial number of the musical data B is, e.g., "B00001211", the entrusted distributor is identified as a convenience company A.

In this way, after the serial number managing unit 34 identified the entrusted distributor 2, the charge collecting unit 33 pays a distribution fee to the entrusted distributor 2.

The cellular phone 25 of the music reproducing terminal 12 receives the reproduction permission authenticating key transmitted from the key transmitting unit 32 and stores it in the key memory 26. The decrypting unit 27 decrypts the encrypted musical data B by using the reproduction permission authenticating key when the reproduction permission authenticating key is stored in the key memory 26.

The music reproducing unit 28 reproduces a musical data decrypted by the decrypting unit 27 and outputs it from the speaker 29.

As is clear from the above descriptions, according to the first embodiment, since the contents reproducing unit receives the reproduction permission authenticating key from the contents downloading server 1 and decrypts the encrypted musical data recorded in the CD-ROM 21 by using the reproduction permission authenticating key, it becomes possible to reproduce a musical data without decrypting a huge amount of musical data itself. Accordingly, it not only keeps a communication fee low but reduces a network traffic even when data is downloaded simultaneously on the date of issue of a new tune.

while in the first embodiment a reference is made to the system where encrypted musical data recorded in the CD-ROM 21 is decrypted, without being limited thereto, an encrypted animation data recorded in the CD-ROM 21 may be decrypted.

### Second Embodiment

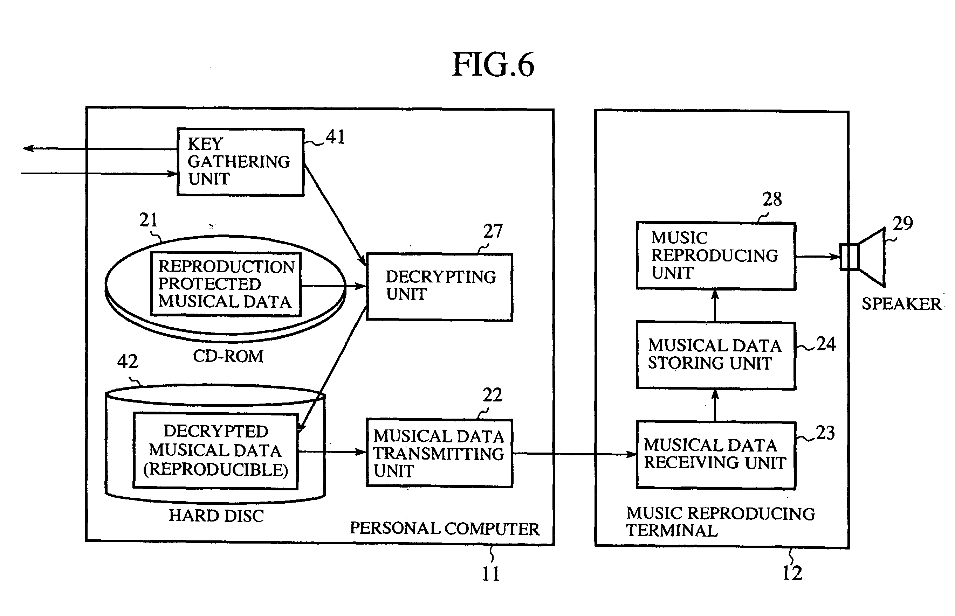

FIG. 6 is a block diagram showing the contents reproducing system in the contents downloading system according to the second embodiment. The same reference numerals as in FIG. 1 indicate the same components, and therefore descriptions thereof are omitted for brevity's sake.

Referring to FIG. 6, reference numeral 41 denotes a key gathering unit (key requesting means, receiving means) for receiving the reproduction permission authenticating key from the contents downloading server 1, 42 denotes a hard disk for storing therein decrypted musical data.

The operation of the contents reproducing unit of the first embodiment will now be described.

In the first embodiment, the personal computer 11 transmits an encrypted musical data to the music reproducing terminal 12 and decrypts it thereby. Alternatively, the personal computer 11 may decrypt an encrypted musical data by receiving the reproduction permission authenticating key from the contents downloading server 1 through, e.g., Internet, so as to transmit the decrypted musical data to the music reproducing terminal 12.

### Third Embodiment

In the first and second embodiments, the contents reproducing unit is made up of the personal computer 11 and the music reproducing terminal 12. Without being limited thereto, the contents reproducing unit 3 may be configured only by the music reproducing unit 12.

### Industrial Applicability

As described above, the contents reproducing unit according to the present invention is qualified for a system where digital contents such as a musical data are downloaded for reproducing it.

Moreover, the contents downloading server and the contents downloading system are qualified for a system where digital contents such as a musical data are effectively distributed.

## Claims

1. A contents reproducing unit comprising:
key requesting means (25) for requesting an issue of a decryption key used for decryption of encrypted data recorded in a free distributed memory medium (21);
receiving means (25) for receiving the decryption key from a contents downloading server (1) upon request of an issue of the decryption key from the key requesting means (25);
decrypting means (27) for decrypting the encrypted data recorded in said memory medium (21) by using the decryption key received from said receiving means (25).

2. The contents reproducing unit according to claim 1, wherein the encrypted data recorded in said memory medium (21) are a musical data.

3. The contents reproducing unit according to claim 2, wherein reproducing means (28) is provided for reproducing a musical data decrypted by said decrypting means (27).

4. A contents downloading server comprising:
distribution entrusting means (31) for entrusting free distribution of a memory medium (21) in which encrypted data are recorded;
transmitting means (32) for transmitting a decryption key to a contents reproducing unit (3) upon reception of a request for an issue of the decryption key from said contents reproducing unit (8) of a user who has got free distribution of said memory medium (21).

5. The contents downloading server according to claim 4, wherein charge collecting means (33) is provided for collecting a charge from a user.

6. The contents downloading server according to claim 5, wherein said charge collecting means (33) pays a distribution fee to an entrusted distributor of the memory medium (21).

7. The contents downloading server according to claim 6, wherein said charge collecting means (33) receives from said contents reproducing unit (3) a serial number of the encrypted data recorded in said memory medium (21) upon reception of a request for an issue of the decryption key from said contents reproducing unit (3), and identifies the entrusted distributor of said memory medium (21) based on the serial number of the encrypted data.

8. The contents downloading server according to claim 4, wherein the encrypted data recorded in said memory medium (21) are a musical data.

9. The contents downloading server according to claim 8, wherein said transmitting means (32) transmits the decryption key on the day of issue of a new tune upon reception of a request for an issue of the decryption key before the day of issue of the new tune.

10. A contents downloading system wherein a contents downloading server (1) entrusts free distribution of a memory medium (21) in which encrypted data are recorded and transmits a decryption key to a contents reproducing unit (3) upon reception of a request for an issue of the decryption key from said contents reproducing unit (3) of a user who has got free distribution of said memory medium (21), and wherein said contents reproducing unit (3) decrypts encrypted data recorded in said memory medium (21) by using the decryption key upon reception of the decryption key from said contents downloading server (1) .
